# EUROPÄISCHE PATENTSCHRIFT

(11) **EP 0 933 626 B1**
(45) Veröffentlichungstag und Bekanntmachung des Hinweises auf die Patenterteilung: **15.10.2003**
(21) Anmeldenummer: 99100062.1
(22) Anmeldetag: 05.01.1999
(51) Int. Cl.: G01K 1/08, G01K 7/18

(54) **Verfahren zur Herstellung eines elektrischen Sensors und elektrischer Sensor**
Method of making an electrical temperature sensor and electrical temperature sensor
Procédé de fabrication d'un capteur de température électrique et capteur de température électrique

(30) Priorität: 30.01.1998 DE 19803506
(43) Veröffentlichungstag der Anmeldung: 04.08.1999
(73) Patentinhaber: E.G.O. ELEKTRO-GERÄTEBAU GmbH, 75038 Oberderdingen (DE)
(72) Erfinder: Block, Volker, 75015 Bretten (DE); Suss, Alfred, 75015 Bretten (DE)
(74) Vertreter: Patentanwälte Ruff, Wilhelm, Beier, Dauster & Partner

(56) Entgegenhaltungen:
- DE-A- 2 446 348
- DE-A- 19 542 883
- US-A- 4 222 025
- US-A- 4 262 532
- US-A- 4 906 965

## Beschreibung

Die Erfindung betrifft ein Verfahren zur Herstellung eines elektrischen Sensors und einen nach diesem Verfahren hergestellten elektrischen Sensor. Der Sensor kann insbesondere ein elektrischer Widerstands-Temperaturfühler sein, wie er zur Messung der Temperatur an Meßobjekten oder in Meßräumen zum Zwecke der Anzeige, Aufzeichnung, Regelung oder Steuerung im Zusammenwirken mit geeigneten Meß- oder Steuergeräten verwendet werden kann.

Zur Messung von Temperaturen beispielsweise im zu beheizenden Nutzraum eines Backofens mit Hilfe elektronischer Schaltungen können Temperatursensoren oder Temperaturfühler verwendet werden, deren signalgebende Elemente in Form von elektrischen Widerständen oder Widerstandsschaltungen vorliegen, die im Meßraum angeordnet werden können. Der sich bei Temperaturänderungen ändernde elektrische Widerstand der signalgebenden Elemente kann mit Hilfe einer elektronischen Schaltung zur Temperaturmessung genutzt werden.

Es ist schon ein Temperaturfühler vorgeschlagen worden, dessen signalgebendes Element eine in Schichttechnik aufgebaute elektrische Sensoranordnung ist, die auf einem elektrisch isolierenden Träger in Form einer Keramikplatte aufgebracht ist. Zum Schutz gegen Beschädigung, Verschmutzung und Beeinträchtigung durch Dünste oder Dämpfe, wie sie beispielsweise im Nutzaum bzw. der Muffel eines Backofens vorkommen können, ist diese elektrische Sensoranordnung in ein nach außen abgedichteten, metallisches Rohr eingebracht, das eine schützende Ummantelung für die Sensoranordnung bildet. Das durch die vom Keramikträger getragene Schichtanordnung gebildete Sensorelement ist mittels einer elektrisch isolierenden, wärmeleitfähigen Masse in das metallische Rohr eingebettet. Ein geschlossenes Rohrende ragt bei installiertem Temperaturfühler in den Nutzraum des Backofens hinein. Die Zuleitungen zur elektrischen Kontaktierung des Sensorelementes werden durch das gegenüberliegende, offene Ende des Rohres nach außen geführt und müssen gegen das metallische Rohr isoliert sein. Ein derartig aufgebauter Temperaturfühler ist in der Herstellung aufwendig und nur schwer mit hoher Qualität herzustellen. Insbesondere sind die Kontaktübergangsstellen von der Sensoranordnung zu den Zuleitungen problematisch.

Die US 4,906,965 zeigt einen gewendelten Widerstand, der als Bahn auf ein flaches Keramiksubstrat aufgebracht ist. Dieses Keramiksubstrat wird anschließend zusammengerollt.

Die DE 2 446 348 beschreibt ein elektrisches Bauelement, bei dem eine elektrisch wirksame Schicht auf die Innenseite eines hohlstabförmigen Trägerkörpers aus Glas oder Keramik aufgebracht ist.

Die US 4,262,532 zeigt ein Keramiksubstrat, beispielsweise aus Aluminiumoxid, das einen langgestreckten Widerstand in gewendelter Form trägt.

Der Erfindung liegt die Aufgabe zugrunde, ein einfach durchführbares Verfahren zur Herstellung eines mit hoher Qualität herstellbaren, insbesondere als Temperaturfühler ausgebildeten Sensors, sowie einen derartigen Sensor zu schaffen, der auf einen neuartigen Träger aufgebracht ist.

Zur Lösung dieser Aufgabe schlägt die Erfindung ein Verfahren mit den Merkmalen von Anspruch 1 und einen Sensor mit den Merkmalen von Anspruch 10 vor. Bevorzugte Ausführungsformen und Weiterbildungen sind in den Unteransprüchen angegeben.

Bei dem erfindungsgemäßen Verfahren wird zunächst die Sensoranordnung mittels eines Dickschicht- oder Dünnfilm-Verfahrens auf den elektrisch isolierenden, flächig ausgedehnten Träger aufgebracht. Bei in Dickschichttechnik hergestellten Sensoranordnungen kann dies insbesondere nach dem Siebdruckverfahren in einem oder mehreren Druckschritten, gegebenenfalls mit zwischenzeitlicher Wärmebehandlung, erfolgen. Vorzugsweise danach erfolgt die Bildung der Ummantelung für die Sensoranordnung derart, daß der Träger mindestens einen Teil der Ummantelung bildet. Bei einem erfindungsgemäßen Sensor hat daher der Träger nicht nur eine Tragefunktion, sondern auch eine Schutzfunktion im Rahmen der Ummantelung. Vorteilhaft ist insbesondere, daß die aufgrund ihres Herstellungsprozesses fest auf dem Träger haftende Sensoranordnung damit gleichzeitig sicher innerhalb der Ummantelung befestigt ist, so daß keine gesonderten Befestigungsmittel erforderlich sind. Die der Sensoranordnung abgewandte Rückseite des Trägers bildet mindestens einen Bereich der Außenseite der Ummantelung, während die Sensoranordnung direkt an der Innenseite der Ummantelung im Bereich des Trägers flächig und fest haftend angeordnet ist. Der Herstellungsaufwand für durch eine Ummantelung schützend umgebende Sensoranordnungen wird dadurch deutlich herabgesetzt. Derartige Sensoren sind auch im Langzeitbetrieb aüßerst betriebssicher.

Zwar ist es möglich, daß die in Schichttechnik aufgebaute elektrische Sensoranordnung, die im folgenden auch als Sensorschicht bezeichnet wird, im wesentlichen eine gesamte Oberfläche des Trägers bedeckt. Es kann jedoch auch nur ein Bruchteil einer Träger-Oberseite durch die Sensorschicht eingenommen werden, beispielsweise zwischen 10 und 90 %, insbesondere zwischen 30 und 70 %. Auch der freibleibende Teil des Trägers kann mindestens teilweise, vorzugsweise aber im wesentlichen vollständig zur Bildung der Ummantelung verwendet werden.
Die Verwendung eines im wesentlichen starren, biegesteifen Trägers, beispielsweise in Form einer Keramikplatte, ist möglich. Bei einer Weiterbildung der Erfindung wird zur Bildung der Ummantelung ein Träger aus biegefähigem und/oder verformbarem Material verwendet, der mindestens bereichsweise derart verformt, insbesondere gebogen wird, daß er die Sensoranordnung mindestens teilweise seitlich umgibt oder diese umschließt. Es ist möglich, daß dabei ein die Sensoranordnung tragender Bereich des Trägers im wesentlichen nicht verformt oder gebogen wird, während ein daran anschließender Bereich mindestens bereichsweise verformt, insbesondere gebogen oder gefalzt wird. Wenn die Sensoranordnung selbst eine gewisse Flexibilität bzw. Biegsamkeit aufweist, kann auch ein die Sensoranordnung tragender Bereich des Trägers verformt werden, ohne daß die Sensoranordnung beschädigt wird, beispielsweise abplatzt. Die Verformung des Trägers insbesondere durch Biegen kann elastisch und/oder plastisch sein.

Besonders bevorzugt ist ein Verfahren, bei dem zur Bildung der Ummantelung der Träger derart gebogen wird, daß er eine in einer Umfangsrichtung um die Sensoranordnung geschlossene Ummantelung bildet. Zusammenstossende Kanten des verformten Trägers können zur Versiegelung der Ummantelung, beispielsweise durch Schweißen, Löten, Verprägen oder Falzen, mechanisch fest und vorzugsweise gasdicht miteinander verbunden werden. Die Ummantelung wird in den genannten Fällen im wesentlichen vollständig durch den Träger gebildet.

Die Ummantelung kann langgestreckt sein, wobei der Querschnitt in weiten Grenzen der beabsichtigten Anwendung angepaßt werden kann. Bevorzugt sind kreisförmige, ovale oder flachovale oder ellipsenförmige Querschnitte. Es ist auch möglich, daß die Ummantelung im Querschnitt mehreckig, insbesondere dreieckig oder viereckig sein kann, vorzugsweise mit mindestens einer im wesentlichen ebenen Seitenfläche auf der vorzugsweise die Sensoranordnung angebracht sein kann.

Anstatt den Träger derart großflächig auszulegen und zu falzen oder zu biegen, daß er im wesentlichen allein die Ummantelung bildet, ist bei anderen Ausführungsformen vorgesehen, daß zur Bildung der Ummantelung der Träger mit mindestens einem gesonderten, vorzugsweise mindestens bereichsweise gekrümmten Ummantelungselement verbunden wird. Das Ummantelungselement oder mehrere, miteinander zu verbindende Ummantelungselemente, können nach Art einer Abdeckung oder eines Deckels derart über der auf dem Träger angebrachten Sensoranordnung angebracht werden, daß die Ummantelungselemente zusammen mit dem Träger die Ummantelung bilden. Eine mechanisch feste, vorzugsweise gasdichte Verbindung zwischen Träger und Ummantelungselement oder zwischen verschiedenen Ummantelungselementen kann vorzugsweise entlang linienhafter Verbindungsbereiche erfolgen, insbesondere im wesentlichen parallel zur Längserstreckung eines Sensors. Die Verbindung kann beispielsweise durch Verlöten, Verschweißen oder Verprägen von aneinanderstossenden und/oder einander überlappenden Kantenbereichen von Träger und/oder Ummantelungselement erfolgen.

Bei einer bevorzugten Ausführungsform wird zur Herstellung des Trägers auf eine biegsame Edelstahlplatte oder Edelstahlfolie die Isolierschicht aufgebracht, auf die dann die Sensoranordnung in Schichttechnik aufgebracht wird. Der Träger, auf dem elektrisch isoliert die Sensoranordnung aufgebracht ist, wird bei diesen Ausführungsformen durch das Substrat und die darauf aufgebrachte Isolierschicht gebildet und ist damit mehrschichtig, insbesondere zweischichtig, zumindest in dem Bereich, der die Sensoranordnung trägt. Die Substratdicke kann im Bereich etwa eines Millimeters oder darunter liegen, beispielsweise zwischen 0,5 und 1 mm. Folienmaterial mit einer Dicke von unter 0,5 mm, beispielsweise zwischen 0,1 und 0,4 mm, kann ebenfalls verwendet werden.

Die Isolierschicht kann im wesentlichen aus isolierendem Kunststoff bestehen, wenn die beabsichtigten Einsatztemperaturen des Sensors etwa 200° C nicht übersteigen. Insbesondere bei Backofen-Temperaturfühlern ist es zweckmässig, die Isolierschicht aus einem Material aufzubauen, das Glasphasen und/oder Keramikphasen und gegebenenfalls Zusatzstoffe enthält. Die Isolierschicht kann insbesondere im Dickschichtverfahren aufgebracht werden, beispielsweise durch Siebdruck. Typische Isolierschichtdicken können zwischen 50 und 100 Mikrometern liegen. Bevorzugte Sensorschichtdicken können zwischen 1 und 20 Mikrometern liegen. Es ist auch möglich, daß auf die dem Träger abgewandte Oberseite der Sensoranordnung mindestens bereichsweise eine Isolierschicht aufgebracht wird, was beispielsweise für solche Anwendungen zweckmäßig ist, bei denen ein Teil der Ummantelung beispielsweise durch Verformung, in unmittelbare Nähe der Sensorschicht-Oberseite gebracht werden soll.

Die auf einem einschichtigen oder mehrschichtigen Träger durch geeignete Beschichtungstechniken fest aufgebrachte Sensorschicht, die durch den Träger und gegebenenfalls weiterer Ummantelungselemente mit einer schützenden Ummantelung umgeben ist, muß für den Einsatz elektrisch kontaktiert werden. Dazu sind bei bevorzugten Ausführungsformen elektrische Anschlußkontakte für die Sensoranordnung vorgesehen, die auf den Träger durch Schichttechnik, insbesondere Dickschichttechnik aufgebracht werden. Zur Herstellung der Anschlußkontakte kann somit die gleiche Technik wie bei der Sensorschichtherstellung eingesetzt werden, was die Herstellung besonders einfach und kostengünstig macht. An die Anschlußkontakte können in bekannter Weise beispielsweise Litzen oder Drähte angeschweißt oder angelötet werden. Bei einer bevorzugten Ausführungsform werden die Anschlusskontakte derart bis in einen von außen zugänglichen Endbereich der zu bildenden Ummantelung geführt, daß die Anschlußkontakte nach Art eines Steckkontaktes kontaktierbar sind. Ein Anschlußkontakt mit dem zugehörigen Abschnitt des Trägers kann beispielsweise nach Art einer Steckzunge ausgebildet sind. Es ist auch möglich, daß die Ummantelung im äußeren Endbereich der Anschlußkontakte durch plastische Verformung derart gestaltet, insbesondere zusammengedrückt wird, daß ein auf einen Anschlußkontakt aufgelegtes Kontaktelement, insbesondere eine Kontaktfeder, durch einen elektrisch isolierten Abschnitt der Ummantelung auf den zu kontaktierenden Anschlußkontakt gedrückt wird, so daß es dort bleibend eingeklemmt bzw. verprägt ist.

Durch das Verfahren kann somit ein Sensor geschaffen werden, dessen Ummantelung mindestens teilweise durch den Träger gebildet ist, wobei die Sensoranordnung an der Innenseite der Ummantelung flächig und fest haftend aufgebracht ist. Der verbleibende Innenraum der Ummantelung kann gasgefüllt bleiben oder, wenn dies gewünscht ist, durch elektrisch isolierendes, insbesondere wärmeleitfähiges Material ausgefüllt werden. Wegen der festen Haftung der Sensoranordnung an dem Trägerabschnitt der Ummantelung ist eine Ausfüllung des Ummantelungsinnenraumes aus Stabilisierungsgründen nicht erforderlich.

Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen dargestellt und werden im folgenden näher erläutert. In den Zeichnungen zeigen:
- Fig. 1: Eine Draufsicht auf einen mit einer Dickschicht-Sensoranordnung beschichtetes, elektrisch isoliertes Edelstahlblech,
- Fig. 2: einen Querschnitt senkrecht zur Längsrichtung eines Temperaturfühlers, der aus dem beschichteten Blech von Fig. 1 durch Umfalten eines Substratabschnittes zur Bildung einer Ummantelung hergestellt ist,
- Fig. 3: den Temperaturfühler aus Fig. 2 in einem gebrochenen Querschnitt parallel zur Längsachse, wobei der Temperaturfühler an der Gehäusewand eines Backofenheizraumes montiert und über einen Aufsteckkontakt elektrisch kontaktiert ist,
- Fig. 4 bis 9: verschiedene Querschnitte senkrecht zur Längsachse unterschiedlicher Ausführungsformen von Temperaturfühlern mit einteiliger oder mehrteiliger Ummantelung,
- Fig. 10: eine schematische Darstellung der Herstellung eines elektrischen Anschlusses durch Einklemmen einer Kontaktfeder.

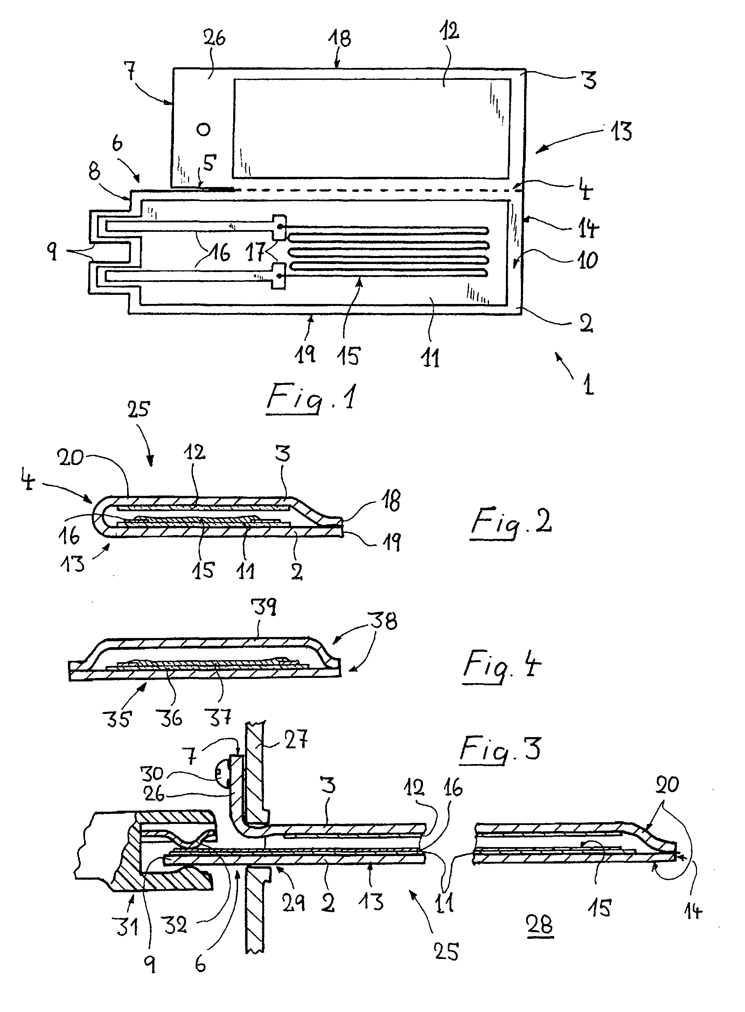

In Fig. 1 ist in Draufsicht ein zur Herstellung eines als Temperaturfühler einsetzbaren elektrischen Sensors vorgesehenes Edelstahl-Substrat 1 in Form einer ca. 0,5 mm dicken, biegsamen Edelstahlplatte gezeigt. Die Platte 1 gliedert sich in einen langgestreckten, rechteckförmigen Trägerabschnitt 2 und einen einstückig damit ausgebildeten, ebenfalls rechteckigen Abdeckabschnitt 3, zwischen denen ein gestrichelt gezeichneter Faltabschnitt 4 liegt, an dessen in der Figur linkem Ende ein, dem Trägerabschnitt 2 vom Abdeckabschnitt 3, trennender Einschnitt 5 vorgesehen ist. Der Faltabschnitt 4 liegt etwa mittig zwischen den Längskanten des Substrats 1. Auf der Seite des Einschnitts 5 steht der Trägerabschnitt 2 mit einem Kontaktierungsabschnitt 6 über ein Stirnende 7, des Abdeckabschnittes 3 hinaus. Aus dem Stirnende 8 des Trägerabschnitts 2 ragen zwei voneinander seitlich beabstandete rechteckförmige Zungen 9 heraus.

Auf der ebenen, dem Betrachter zugewandten Oberseite 10, des Substratabschnittes ist im Siebdruckverfahren eine Isolierschicht 11 aufgebracht, die glasartige und keramische Phasen aufweist und die durch Wärmebehandlung einer entsprechenden Dickschichtpaste hergestellt wurde. Die fest auf dem Trägerabschnitt 2 haftende Isolierschicht 11, hat eine im wesentlichen gleichförmige Dicke von ca. 50 Mikrometern und bedeckt den gesamten Trägerabschnitt mit Ausnahme ca. 5 mm breiter Randbereiche, wobei im Bereich des Faltabschnittes 4 ein Abstand von ca. 5 mm zwischen die Isolierschicht und einer gestrichelt gezeichneten Verlängerung des Einschnittes 5 bleibt. Auf den Abdeckabschnitt 3 ist eine entsprechende Isolierschicht 12 im gleichen Arbeitsprozeß mit der Isolierschicht 11 aufgebracht worden, wobei die Isolierschicht 12 im Bereich des Stirnendes 7 einen größeren Abstand von diesem hat als von den anderen Begrenzungskanten.

Nach Herstellung der Isolierschichten 11,12 durch Siebdruck und nachfolgende Wärmebehandlung, wurde auf die Isolierschicht 11 des Trägerabschnittes eine nur schematisch dargestellte, im Beispiel mäanderartig verlaufende Sensoranordnung 15 ebenfalls in Dickschichtverfahren aufgebracht. Das elektrische Widerstandsmaterial der Sensoranordnung 15 hat einen stark posiviten Temperaturkoeffizienten des elektrischen Widerstandes und kann beispielsweise aus Platin hergestellt sein. Der eng mäandrierende Verlauf der Sensormaterial-Leiterbahn ermöglicht es, auf engem Raum eine sehr lange Leiterbahn des Widerstandsmaterials unterzubringen, deren Widerstand sich bei Temperaturveränderungen deutlich meßbar ändert.

Die Sensoranordnung 15 kann über zwei Anschlußkontaktstreifen 16 elektrisch kontaktiert werden, deren eines, rechteckförmig erweitertes, der Sensorenanordnung zugewandtes Ende 17 elektrisch leitend mit einem zugeordneten Ende der die Sensoranordnung 15 bildenden Leiterbahn verbunden ist, während jeweils das andere Ende eines Kontaktstreifens im Bereich einer Zunge 9 endet. Die Anschlußkontakte 16 sind ebenfalls im Dickschichtverfahren hergestellt und bestehen im wesentlichen aus einem elektrisch gut leitenden Metall, beispielsweise Silber-Palladium. Bei der Beschichtung der Isolierschicht 11 werden üblicherweise zuerst die Kontaktstreifen 16 und danach die Leiterbahn der Sensoranordnung 15 aufgebracht, eine umgekehrte Beschichtungsreihenfolge ist möglich.

Ein beschichtetes Edelstahl-Substrat der in Fig. 1 gezeigten Art ist sehr einfach aufgebaut und mit herkömmlichen Dickschicht-Beschichtungsmethoden schnell und kostengünstig herzustellen. Das Substrat 1 bzw. der Trägerabschnitt 2 bildet zusammen mit der die Sensoranordnung 15 und die Kontaktstreifen 16 tragenden Isolierschicht 11 einen bereichsweise mehrschichtigen, im gezeigten Beispiel zweischichtig aufgebauten, elektrisch isolierenden Träger 13 für die Sensoranordnung 15, der neben der Sensoranordnung auch Kontaktelektroden in Form der Streifen 16 trägt.

Nach Beschichtung des Substrats 1 in der beschriebenen und in Fig. 1 gezeigten Weise kann der Träger automatisch oder manuell derart umgebogen bzw. gefaltet werden, daß im Bereich des Faltabschnittes 4 eine langgestreckte, einachsig gekrümmte, im Querschnitt etwa C-förmige Krümmung entsteht, während die durch die Isolierschichten 11, 12 abgedeckten Bereiche im wesentlichen eben bleiben. In Fig. 2 ist das fertig gefaltete bzw gebogene Substrat im Querschnitt senkrecht zur Längsachse gezeigt. Es ist zu erkennen, daß der ebene Abdeckabschnitt 3 nun oberhalb der Sensoranordnung 15 und oberhalb des Trägerabschnittes 2 liegt, wobei zwischen Abdeckabschnitt 3 bzw. Isolierschicht 12 und der Oberseite der Sensoranordnung 15 und der Kontaktstreifen 16 ein geringer Abstand verbleibt. Der Querschnitt ist insgesamt flachoval mit parallelen Seitenabschnitten. Die in Fig. 1 auf gegenüberliegenden Seiten angeordneten Längskanten 18, 19 des Trägers liegen nun bündig übereinander, wobei sich die kantennahen Bereiche der Oberfläche 10 flächig berühren. Hierzu wurde der Längskantenbereich 18 S-förmig zum ebenen Trägersabschnitt 2 hin plastisch verformt. Die aufeinanderliegenden Längskantenbereiche bilden linienhafte Verbindungsbereiche, entlang derer der Trägerabschnitt und der Abdeckabschnitt durch Schweißen stoffschlüssig und gasdicht verbunden sind. Die Kantenverbindung kann beispielsweise auch durch Prägen, Falzen, Kleben oder Verlöten erfolgen und bewirkt eine Versiegelung des in Umfangsrichtung durch den gebogenen Träger eingeschlossenen Innenraumes, in dem die Sensoranordnung 15 angeordnet ist.

Der im Bereich des Faltabschnittes 4 umgebogene und entlang der Längskanten 18, 19 stoffschlüssig verbundene Träger bildet eine die Sensorandordnung 15 schützend umgebende Ummantelung 20. Die Sensoranordnung 15 ist in einem inneren Hohlraum der Ummantelung befestigt, in dem sie durch eine geeignete Beschichtungstechnik auf die Oberseite 10 des isolierten Substrats fest haftend aufgebracht wurde und indem die Oberseite durch geeignetes Umbiegen des Substrates zur Innenseite der Ummantelung 20 gemacht wurde. Die Sensoranordnung ist flächig haftend an der Innenseite der Ummantelung angebracht, die im Bereich der Sensoranordnung, zweischichtig (Substrat 1 und Isolierschicht 11) ist. Nach der Erfindung ist es also nicht mehr nötig, eine Sensoranordnung in einen bereits existierenden Hohlraum, beispielsweise eines Edelstahlrohres einzubringen und dort zu befestigen. Vielmehr erfolgt zuerst die Befestigung und dann die Bildung des zur Aufnahme des Sensoranordnung vorgesehenen Hohlraumes.

Bei der in Fig. 2 gezeigten Ausführungsform eines erfindungsgemäß hergestellten und ausgebildeten Temperaturfühlers wird die Ummantelung 20 vollständig durch das Edelstahlblech 1 gebildet, so daß gesonderte Ummantelungselemente für einen beschichteten Träger oder aber von Ummantelungen gesonderte beschichtete Träger, die in den Mantel eingeführt werden müssen, entfallen.

Der in Fig. 2 im Querschnitt gezeigte Temperaturfühler 25 ist in Fig. 3 in einem Längsschnitt in einem montierten Zustand gezeigt. Es ist zu erkennen, daß der Trägerabschnitt 2 und der Abdeckabschnitt 3 auch im Bereich der den Stirnenden 7, 8 gegenüberliegenden Stirnendes 14 aneinanderstoßen und dort verschweißt sind. Der in Fig. 1 im Bereich des Einschnitts 5 liegende, nicht von der Isolierschicht 12 bedeckte Bereich des Abdeckabschnitts 3 ist von der Isolierschicht 12 weg senkrecht nach hinten gebogen, so daß er in Fig. 3 senkrecht nach oben und senkrecht zum horizontalen Substratabschnitt 2 liegt. Der Abschnitt 26 des Trägers 1 dient der Befestigung des Temperaturfühlers an einer in der Figur vertikalen Gehäusewand, die einen Nutzraum 28 bzw. eine Muffel eines Backofens umschließt und die eine dem Querschnitt des Sensors 25 angepaßte Durchgangsöffnung 29 hat, durch die der die Sensoranordnung 15 aufweisende Abschnitt des Temperaturfühlers in den Nutzraum 28 eingeführt werden kann, bis der Abschnitt 26 an der Außenseite der Wand 27 anschlägt. Durch eine den Abschnitt 26 durchgreifende, in ein Gewinde der Muffelwand 27 eingreifende Schraube 30 wird der Temperaturfühler 25 lagesicher an der Gehäusewand befestigt.

Der in Fig. 1 gut erkennbare Kontaktierungsabschnitt 6 mit den Zungen 9 ragt dabei nach außen vor, so daß im Bereich der Zungen 9 die Anschlußkontaktstreifen 16 frei liegen und elektrische Kontakte nach Art von Steckzungen bilden. Bei der gezeigten Ausführungsform ist der Kontaktabschnitt 6 zum Zusammenwirken mit einem Stecker 31 vorgesehen, der zwei mit jeweils einem Kontaktstreifen 16 elektrisch leitend verbindbare Kontaktfedern 32 hat, die bei Aufstecken des Steckers 31 die Kontaktzungen 9, 16 sicher kontaktieren. Eventuell vorhandene Oxidschichten können beim Aufstecken des Steckers aufkratzt werden. Statt dieser leicht lösbaren elektrischen Verbindung des Temperaturfühlers 25 ist es auch möglich, auf die Kontaktstreifen 16 Litzen oder Drähte von Stromführungskabeln aufzulöten oder aufzuschweißen.

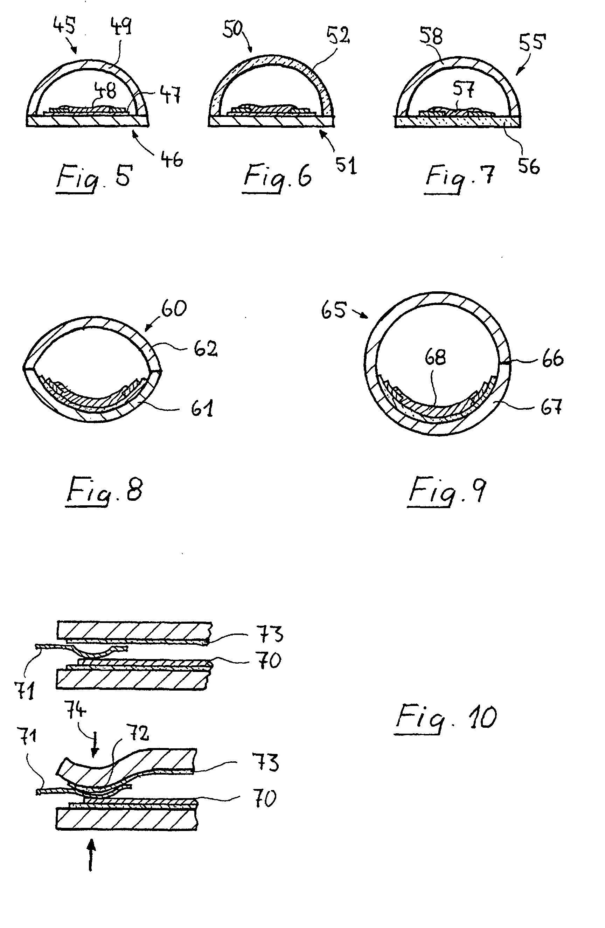

In Fig. 4 ist eine andere Ausführungsform eines Temperaturfühlers im Querschnitt gezeigt. Diese Ausführungsform hat eine ebene Edelstahlplatte 35, auf die eine Isolierschicht 36 und eine Sensoranordnung 37 in Dickschichttechnik in der beschriebenen Weise aufgebracht wurde. Die Platte 35 kann in Form und Aufbau im wesentlichen identisch mit dem Trägerabschnitt 2 von Fig. 1 sein. Im Gegensatz zu der Ausführungsform nach den Fig. 1 bis 3, bildet bei dieser Ausführungsform der zweischichtige Träger 35, 36 nur einen unteren, ebenen Teil einer Ummantelung 38. Der obere Teil wird durch ein vom Träger gesondertes Ummantelungselement in Form eines Edelstahl-Abdeckblechs gebildet, das in Form etwa dem Abdeckabschnitt 3 von Fig. 1 entspricht. Jedoch ist im Unterschied dazu an der Innenseite des Abdeckbleches 39 keine Isolierschicht vorgesehen. Nach Herstellung des beschichteten Trägers wird das vorgeformte, an seinen Rändern nach unten gezogene Abdeckblech derart auf den Träger aufgesetzt, daß die Kantenbereiche aufeinander aufliegen, während ein von den Kanten umschlossener ebener Mittelbereich in einem Abstand oberhalb der Sensoranordnung 37 etwa parallel zum Träger verläuft. Das haubenartige Abeckblech und der im wesentlichen ebene Träger werden entlang der linienhaften Verbindungen im Kantenbereich verschweißt, verlötet oder durch Prägen fest und vorzugsweise gasdicht miteinander verbunden. Obwohl eine einzige Abdeckung 39 in der Regel ausreicht und herstellungstechnisch vorteilhaft ist, ist es grundsätzlich auch möglich, eine Ummantelung durch einen Träger und mehrere gesonderte Ummantelungselemente zu bilden, die entsprechend miteinander verbunden, beispielsweise verlötet, verschweißt oder verprägt werden können.

Der Aufbau einer Ummantelung aus einem Träger und mindestens einem gesonderten Ummantelungselement kann fertigungstechnisch vorteilhaft sein und ermöglicht die Verwendung von unterschiedlichen Materialien für Träger bzw. Substrat einerseits und gesonderte Ummantelungselemente andererseits, so daß eine Ummantelung der Erfindung auch aus mehreren unterschiedlichen Materialien aufgebaut sein kann.

Die Fig. 5 bis 7 zeigen drei weitere Ausführungsbeispiele, bei denen der die Sensoranordnung tragende ebene Träger nicht verformt wird. Bei der Ausführungsform nach Fig. 5 ist eine im Querschnitt D-förmige und dadurch zweieckige Ummantelung 45 dadurch gebildet, daß auf einen Träger 46, der durch eine mit einer Isolierschicht 47 beschichtete obere Edelstahlplatte gebildet ist, die kontaktierte Sensoranordnung 48 trägt, ein halbkreisförmig gebogenes Edelstahlblech 49 derart aufgesetzt ist, daß dessen planparallelen Längskanten auf die die Isolierschicht tragende Oberfläche der Platte 46 stoßen. Entlang der Stoßfugen sind die Edelstahlplatte und die Abdeckung 49 zur Bildung der Ummantelung mit Hartlot gasdicht verlötet. Die Ummantelung 50 der in Fig. 6 gezeigten Ausführungsform hat einen durch ein isolierbeschichtetes Edelstahlsubstrat gebildeten Träger 51, der wie der Träger 46 in Fig. 5 aufgebaut und beschichtet ist. Die Abdeckung 52 ist durch die Hälfte eines in Längsrichtung zerschnittenen runden Keramikrohres gebildet, so daß sich insgesamt ein D-förmiger Querschnitt des Sensors ergibt. Träger und Abdeckung sind miteinander verlötet. Bei der Ausführungsform nach Fig. 7 besteht die Ummantelung 55 aus einem ebenen, plattenförmigen elektrisch isolierenden Keramikträger 56, der ohne Zwischenschaltung einer Isolierschicht mit einer Sensoranordnung 57 beschichtet ist. Die halbkreisförmige Abdeckung 58 besteht aus Edelstahl und ist entlang der auf dem Keramikträger 56 aufliegenden Kanten mit diesem verlötet. Die Abdeckung kann auch aus keramischem Material bestehen.

Die Fig. 8 und 9 zeigen Ausführungsbeispiele, bei denen ein zunächst ebener Edelstahlträger in der beschriebenen Weise mit Isolierschicht und Sensoranordnung sowie Kontaktstreifen beschichtet und anschliessend zur Bildung einer Ummantelung etwa kreisbogenförmig gebogen wurde. Bei der Biegung wurde der Krümmungsradius so gewählt, daß ein Abplatzen der Isolierschicht und/oder der elektrisch leitenden Schicht vermieden wird. Die Ummantelung 60 nach Fig. 8 besteht im wesentlichen aus einem einachsig gekrümmten Edelstahlträger 61 und einer spiegelbildlich gekrümmten, entlang in der Spiegelebene aneinanderstoßenden Kanten mit dem Träger verschweißten oder verlöteten Abeckung 62. Der Querschnitt der Ummantelung 60 ist spiegelsymmetrisch zu der Kontaktebene von Träger und Abdeckung und flachoval bzw. flachelliptisch.

Die Edelstahl-Ummantelung 65 der in Fig. 9 gezeigten Ausführungsform ist dagegen rundrohrförmig mit einer einzigen Längs-Schweißnaht 66. Der kreisförmig gebogene Träger 67 bildet ein im Querschnitt rundes Schutzrohr, um die auf dem Träger aufgebrachte Sensoranordnung 68, die an der mit einer fest haftenden Isolierschicht beschichteten Innenseite des Schutzrohres 60 fest haftend angebracht ist. Eine derartige Ausführungsform mit dem querschnittrunden Schutzrohr 60 kann besonders einfach als Ersatz für herkömmliche, rundrohrförmige Temperaturfühler eingesetzt werden, die wesentlich komplizierter aufgebaut und teurer in der Herstellung sein können.

Neben der Kontaktierung durch Anlöten oder Anschweißen von Litzen oder Drähten oder der in Fig. 3 gezeigten Kontaktierung nach Art eines Steckkontaktes bietet die Herstellung von Ummantelungen, bei der plastische Verformung ohnehin vorgenommen werden muß, eine weitere Möglichkeit, eine externe elektrische Anschlußmöglichkeit zu schaffen. Bei dem in Fig. 10 illustrierten Verfahren wird auf einen Dickschicht-Anschlußkontakt 70, der wie der Anschlußkontakt 16 in Fig. 1 aussehen kann, eine Kontaktfeder 71 aufgelegt. Der oberhalb der Kontaktfeder 71 angeordnete Abschnitt 72 der Edelstahl-Ummantelung, der beispielsweise ein Edelstahl-Abdeckblech sein kann und der auf der der Kontaktfeder zugewandten Seite eine Isolierschicht 73 trägt, kann, wie in der unteren Figur gezeigt, durch Aufbringen einer senkrechten Kraft in Richtung 74 auf den Anschlußkontakt 70 gedrückt werden, daß die Kontaktfeder 71 zwischen Anschlußkontakt 70 und Isolierschicht 72 eingeklemmt wird. Auf diese Weise kann die Kontaktfeder 71 auf dem Anschlußkontakt 70 mit sicherem elektrischem Kontakt dauerhaft festgelegt sein. Das in Fig. 10 schematisch dargestellte Verprägen von Kontaktfedern o.ä. Kontaktelementen ist besonders gut für plastisch verformbare Ummantelungen, beispielsweise Edelstahlummantelungen geeignet.

## Patentansprüche

1. Verfahren zur Herstellung eines elektrischen Sensors, insbesondere eines Temperaturfühlers, der mindestens eine in Schichttechnik aufgebaute, auf einem elektrisch isolierenden Träger aufgebrachte elektrische Sensoranordnung hat, die von einer Ummantelung umgeben ist, mit folgenden Schritten:
- Erzeugung der Sensonanordnung in Schichttechnik auf dem Träger;
- Bildung einer Ummantelung für die Sensoranordnung derart, daß der Träger mindestens einen Teil der Ummantelung bildet,
**dadurch gekennzeichnet, dass** zur Herstellung des Trägers auf einem Substrat aus Edelstahl mindestens eine Isolierschicht aus elektrisch isolierendem Material aufgebracht wird und darauf die Sensoranordnung in Schichttechnik aufgebracht wird.

2. Verfahren nach Anspruch 1, **dadurch gekennzeichnet, daß** zur Bildung der Ummantelung der Träger mindestens bereichsweise derart gebogen wird, daß er die Sensoranordnung mindestens teilweise seitlich umgibt oder diese umschließt.

3. Verfahren nach Anspruch 1 oder 2, **dadurch gekennzeichnet, daß** zur Bildung der Ummantelung ein die Sensoranordnung tragender Bereich des Trägers im wesentlichen nicht verformt wird, während ein daran anschließender Bereich mindestens bereichsweise verformt wird, oder daß zur Bildung der Ummantelung ein die Sensoranordnung tragender Bereich des Trägers verformt wird.

4. Verfahren nach einem der vorhergehenden Ansprüche, **dadurch gekennzeichnet, daß** zur Bildung der Ummantelung der Träger derart verformt wird, daß der Träger eine in einer Umfangsrichtung im wesentlichen geschlossenen Ummantelung um die Sensoranordnung bildet.

5. Verfahren nach einem der vorhergehenden Ansprüche, **dadurch gekennzeichnet, daß** zur Bildung der Ummantelung der Träger mit mindestens einem gesonderten und bereichsweise gekrümmten Ummantelungselement verbunden wird.

6. Verfahren nach einem der vorhergehenden Ansprüche, **dadurch gekennzeichnet, daß** der Träger eine biegsame Edelstahlplatte oder Edelstahlfolie ist und daß die Isolierschicht in Dickschichttechnik aufgebracht wird.

7. Verfahren nach einem der vorhergehenden Ansprüche, **dadurch gekennzeichnet, daß** auf die dem Träger abgewandte Oberseite der Sensoranordnung bereichsweise mindestens eine Isolierschicht aufgebracht wird.

8. Verfahren nach einem der vorhergehenden Ansprüche, **dadurch gekennzeichnet, daß** mindestens ein elektrischer Anschlußkontakt für die Sensoranordnung auf den Träger durch Schichttechnik aufgebracht wird.

9. Verfahren nach einem der vorhergehenden Ansprüche, **dadurch gekennzeichnet, daß** die Ummantelung im Bereich von Anschlußkontakten derart plastisch verformt wird, daß ein auf einen Anschlußkontakt aufgelegtes Kontaktelement durch einen elektrisch isolierten Abschnitt der Ummantelung bleibend auf den zugeordneten Anschlußkontakt gepreßt wird.

10. Elektrischer Sensor, insbesondere Temperaturfühler, mit mindestens einer in Schichttechnik aufgebauten, auf einem elektrisch isolierenden Träger aufgebrachten elektrischen Sensoranordnung, die von einer Ummantelung umgeben ist, wobei die Ummantelung (20; 38; 45; 50; 55; 60; 65) mindestens teilweise durch den Träger (13; 35; 46; 51; 56; 61; 67) gebildet ist, **dadurch gekennzeichnet, dass** der Träger mindestens bereichsweise aus mehreren Schichten aufgebaut ist und ein Substrat aus Edelstahl aufweist, auf dem mindestens eine die Sensoranordnung tragende Isolierschicht aufgebracht ist.

11. Sensor nach Anspruch 10, **dadurch gekennzeichnet, daß** die Ummantelung (20; 65) im wesentlichen vollständig durch den Träger (13; 67) gebildet ist.

12. Sensor nach Anspruch 10 oder 11 **dadurch gekennzeichnet, daß** der Träger (13; 61; 67) mindestens bereichsweise gekrümmt ist.

13. Sensor nach einem der Ansprüche 10 bis 12, **dadurch gekennzeichnet, daß** die Ummantelung (60; 65) im Querschnitt im wesentlichen kreisförmig, oval oder ellipsenförmig ist oder daß die Ummantelung (20; 38; 45; 50; 55) im Querschnitt mehreckig, dreieckig oder viereckig ist mit mindestens einer im wesentlichen ebenen Seitenfläche, auf der die Sensoranordnung (15; 37; 48; 57) angeordnet ist.

14. Sensor nach einem der Ansprüche 10 bis 13, **dadurch gekennzeichnet, daß** der Träger (13; 35; 46; 51; 61; 67) mindestens bereichsweise aus mehreren Schichten aufgebaut ist, wobei er durch ein biegsames Edelstahlblech oder eine Edelstahlfolie gebildet ist, wobei die Isolierschicht (11; 36; 47) glasartiges oder keramisches Material aufweist oder in Dickschichttechnik hergestellt ist.

15. Sensor nach einem der Ansprüche 10 bis 14, **dadurch gekennzeichnet, daß** der Träger (13; 35; 46; 51; 56) mindestens im Bereich der Sensoranordnung (15; 37; 48; 57) im wesentlichen eben ist.

16. Sensor nach einem der Ansprüche 10 bis 15, **dadurch gekennzeichnet, daß** die Ummantelung (38; 45; 50; 55; 60) durch den Träger (13; 46; 51; 56; 61) und mindestens ein mit dem Träger verbundenes, gesondertes Ummantelungselement (39; 49; 52; 62) gebildet ist.

17. Sensor nach einem der Ansprüche 10 bis 16, **dadurch gekennzeichnet, daß** die Sensoranordnung (15; 37; 48; 57; 68) flächig haftend an der Innenseite (10) der Ummantelung (20; 38; 45; 50; 55; 60; 65) angebracht ist.

## Claims

1. Method for the manufacture of an electrical sensor, particularly a thermostat, which has at least one electrical sensor arrangement produced using film technology and applied to an electrically insulating support, said sensor arrangement being surrounded by an envelope and involving the following steps:
- producing the sensor arrangement using film technology on the support,
- forming an envelope for the sensor arrangement in such a way that the support forms at least part of the envelope,
**characterized in that** for the production of the support, to a stainless steel substrate is applied at least one insulating film of electrically insulating material and to the latter is applied using film technology the sensor arrangement.

2. Method according to claim 1, **characterized in that** for forming the envelope, the support is at least zonally bent in such a way that it at least partly laterally surrounds or embraces the sensor arrangement.

3. Method according to claim 1 or 2, **characterized in that** for forming the envelope, a support area carrying the sensor arrangement is essentially not deformed, whilst an area connected thereto is at least zonally deformed, or that for forming the envelope a support area carrying the sensor arrangement is deformed.

4. Method according to one of the preceding claims, **characterized in that** for forming the envelope, the support is deformed in such a way that it forms around the sensor arrangement a circumferentially substantially closed envelope.

5. Method according to one of the preceding claims, **characterized in that** for forming the envelope, the support is connected to at least one separate and zonally curved enveloping element.

6. Method according to one of the preceding claims, **characterized in that** the support is a pliable stainless steel plate or stainless steel foil and that the insulating film is applied using thick film technology.

7. Method according to one of the preceding claims, **characterized in that** zonally at least one insulating film is applied to the top of the sensor arrangement remote from the support.

8. Method according to one of the preceding claims, **characterized in that** at least one electrical connection contact for the sensor arrangement is applied to the support using film technology.

9. Method according to one of the preceding claims, **characterized in that**, in the vicinity of the connection contacts, the envelope is plastically deformed in such a way that a contact element applied to the connection contact is permanently pressed by an electrically insulated part of the envelope onto the associated connection contact.

10. Electrical sensor, particularly thermostat, with at least one electrical sensor arrangement formed using film technology and applied to an electrically insulating support is surrounded by an envelope, the envelope (20; 38; 45; 50; 55; 60; 65) being at least partly formed by the support (13; 35; 46; 51; 56; 61; 67), **characterized in that** at least zonally, the support is formed from several films and has a stainless steel substrate, to which is applied at least one insulating film carrying the sensor arrangement.

11. Sensor according to claim 10, **characterized in that** the envelope (20; 65) is substantially completely formed by the support (13; 67).

12. Sensor according to claim 10 or 11, **characterized in that** the support (13; 61; 67) is at least zonally curved.

13. Sensor according to one of the claims 10 to 12, **characterized in that** the envelope (60; 65) is in cross-section substantially circular, oval or elliptical or that the envelope (20; 38; 45; 50; 55) is in cross-section polygonal, triangular or quadrangular with at least one substantially planar lateral face on which is located the sensor arrangement (15; 37; 48; 57).

14. Sensor according to one of the claims 10 to 13, **characterized in that** the support (13; 35; 46; 51; 61; 67) is at least zonally formed from several films and it is constituted by a pliable stainless steel plate or stainless steel foil, the insulating film (11; 36; 47) having glassy or ceramic material or produced by thick film technology.

15. Sensor according to one of the claims 10 to 14, **characterized in that**, at least in the vicinity of the sensor arrangement (15; 37; 48; 57), the support (13; 35; 46; 51; 56) is substantially planar.

16. Sensor according to one of the claims 10 to 15, **characterized in that** the envelope (38; 45; 50; 55; 60) is formed by the support (13; 46; 51; 56; 61) and at least one separate enveloping element (39; 49; 52; 62) connected to the support.

17. Sensor according to one of the claims 10 to 16, **characterized in that** the sensor arrangement (15; 37; 48; 57; 68) is applied in flat adhering manner to the inside (10) of the envelope (20; 38; 45; 50; 55; 60; 65).

## Revendications

1. Procédé de fabrication d'un détecteur électrique, preferé d'une sonde thermométrique, qui présente au moins une configuration de détecteur électrique constituée par une technique de couches et appliquée sur un support électriquement isolant, la configuration de détecteur électrique étant entourée par un revêtement, d'après les pas suivants :
- Création de la configuration de détecteur par une technique de couches sur un support ;
- Formation d'un revêtement pour la configuration de détecteur de telle manière que le support forme au moins une partie du revêtement,
**caractérisé en ce que** pour la fabrication du support sur un substrat en acier spécial on applique au moins une couche isolante en un matériau électriquement isolant et qu'on y applique la configuration de détecteur par une technique de couches.

2. Procédé d'après la revendication 1, **caractérisé en ce que** pour la formation du revêtement, le support est plié au moins dans certains domaines de telle manière qu'il entoure latéralement de manière au moins partielle la configuration de détecteur ou qu'il la renferme.

3. Procédé d'après la revendication 1 ou 2, **caractérisé en ce que** pour la formation du revêtement un domaine du support portant la configuration de détecteur n'est essentiellement pas déformé, tandis que un domaine limitrophe est déformé au moins dans certaines zones, et **en ce que** pour la formation du revêtement un domaine du support portant la configuration de détecteur est déformé.

4. Procédé d'après une des revendications précédentes, **caractérisé en ce que** pour la formation du revêtement le support est déformé de telle manière que le support forme un revêtement autour de la configuration de détecteur essentiellement clos dans une direction de périmètre.

5. Procédé d'après une des revendications précédentes, **caractérisé en ce que** pour la formation du revêtement le support est raccordé avec au moins un élément de revêtement individuel et courbé dans certains domaines.

6. Procédé d'après une des revendications précédentes, **caractérisé en ce que** le support est une plaque flexible en acier spécial ou une feuille en acier spécial et **en ce que** la couche isolante est appliquée par une technique des couches épaisses.

7. Procédé d'après une des revendications précédentes, **caractérisé en ce qu'**au moins une couche isolante est appliquée dans certains domaines à la face supérieure opposée au support de la configuration de détecteur.

8. Procédé d'après une des revendications précédentes, **caractérisé en ce qu'**au moins un contact de branchement électrique pour la configuration de détecteur est appliqué sur le support par une techniques des couches.

9. Procédé d'après une des revendications précédentes, **caractérisé en ce que** le revêtement dans le domaine des contacts de branchement est plastiquement déformé de telle manière, qu'un élément de contact positionné sur un contact de branchement est serré de manière durable sur lé contact de branchement correspondant par un domaine électriquement isolé du revêtement.

10. Détecteur électrique, preferé sonde thermométrique, avec au moins une configuration électrique de détecteur constituée par une technique de couches et appliquée sur un support électriquement isolant, la configuration de détecteur électrique étant entourée par un revêtement, le revêtement (20 ; 38 ; 45 ; 50 ; 55 ; 60 ; 65) étant constitué au moins en partie par le support (13 ; 35 ; 46 ; 51 ; 56 ; 61 ; 67), **caractérisé en ce que** le support est constitué au moins dans certains domaines par plusieurs couches et qu'il présente un substrat en acier spécial, sur lequel est appliquée au moins une couche isolante portant la configuration de détecteur.

11. Détecteur électrique d'après la revendication 10, **caractérisé en ce que** le revêtement (20 ; 65) est formé en substance entièrement par le support (13 ; 67).

12. Détecteur électrique d'après la revendication 10 ou 11, **caractérisé en ce que** le support (13 ; 61 ; 67) est courbé au moins dans certains domaines.

13. Détecteur électrique d'après une des revendications de 10 à 12, **caractérisé en ce que** le revêtement (60 ; 65) présente en section transversale une forme essentiellement ronde, ovale ou elliptique ou **en ce que** le revêtement (20 ; 38 ; 45 ; 50 ; 55) présente en section transversale une forme polygonale, triangulaire ou quadrangulaire avec au moins une surface latérale essentiellement plane, sur laquelle est disposée la configuration de détecteur (15 ; 37 ; 48 ; 57).

14. Détecteur électrique d'après une des revendications de 10 à 13, **caractérisé en ce que** le support (13 ; 35 ; 46 ; 51 ; 61 ; 67) est constitué au moins dans certains domaines en plusieurs couches, en étant formé par une tôle flexible en acier spécial ou par une feuille en acier spécial, la couche isolante (11 ; 36 ; 47) présentant un matériau vitreux ou céramique ou bien étant fabriqué par une technique des couches épaisses.

15. Détecteur électrique d'après une des revendications de 10 à 14, **caractérisé en ce que** le support (13 ; 35 ; 46 ; 51 ; 56) est essentiellement plan au moins dans le domaine de la configuration de détecteur (15 ; 37 ; 48 ; 57).

16. Détecteur électrique d'après une des revendications de 10 à 15, **caractérisé en ce que** le revêtement (38 ; 45, 50 ; 55 ; 60) est constitué par le support (13 ; 46 ; 51 ; 56 ; 61) et par au moins un élément de revêtement (39 ; 49 ; 52 ; 62) individuel et raccordé avec le support.

17. Détecteur électrique d'après une des revendications de 10 à 16, **caractérisé en ce que** la configuration de détecteur (15 ; 37 ; 48 ; 57 ; 68) est appliquée en adhérant en nappe à la face intérieure (10) du revêtement (20 ; 38 ; 45 ; 50 ; 55 ; 60 ; 65).
